# EUROPEAN PATENT APPLICATION

(11) **EP 4 723 645 A1**
(43) Date of publication of application: **08.04.2026**
(21) Application number: 24810433.3
(22) Date of filing: 22.05.2024
(51) Int. Cl.: H04N 21/2187

(54) **PAGE DISPLAY METHOD, APPARATUS AND DEVICE AND STORAGE MEDIUM**

(30) Priority: 24.05.2023 CN 202310596173
(71) Applicant: Beijing Zitiao Network Technology Co., Ltd., Beijing 100190 (CN)
(72) Inventor: WANG, Xinyue, Beijing 100028 (CN); WANG, Youyuan, Beijing 100028 (CN)
(74) Representative: Marks & Clerk LLP
(86) International application number: PCT/CN2024/094761
(87) International publication number: WO 2024/240194

(57) **Abstract**

The present disclosure provides a page display method, apparatus, and device, and a storage medium. The method includes: receiving a trigger operation for requesting to display a target page; and in response to the trigger operation, displaying the target page, and displaying a live video stream of a target object or a target video segment in an avatar display box on the target page. The target video segment is obtained from the live video stream of the target object.

## Description

### CROSS-REFERENCE TO RELATED APPLICATION(S)

This application claims priority to Chinese Patent Application No. 202310596173.3, entitled "PAGE DISPLAY METHOD, APPARATUS AND DEVICE, AND STORAGE MEDIUM" filed on May 24, 2023, which is incorporated by reference in its entirety.

### FIELD

The present disclosure relates to the field of data processing, and in particular, to a page display method, apparatus and device, and a storage medium.

### BACKGROUND

With the development of Internet technology, online livestreaming has become more and more popular among the majority of users. A live streamer can enable an online livestreaming function, and a viewer can enter a livestreaming room of the live streamer to watch livestreaming by tapping an avatar on a personal homepage of the live streamer, or the like.

At present, a static image and a livestreaming identification are displayed in an avatar display box on the personal homepage to prompt that the live streamer is in a livestreaming state. However, the avatar display box displays single content, which cannot meet needs of a user and affects a user experience.

### SUMMARY

In order to solve the above technical problems, embodiments of the present disclosure provide a page display method.

In a first aspect, the present disclosure provides a page display method, including:
receiving a trigger operation for requesting to display a target page, wherein an avatar display box of a target object is set on the target page; and
in response to the trigger operation, displaying the target page, and displaying a live video stream or target video segment of the target object in the avatar display box, wherein the target video segment is obtained from the live video stream of the target object.

In an optional implementation, the displaying a live video stream or target video segment of the target object in the avatar display box includes:
in a case that the target object is in a livestreaming state, displaying the live video stream or target video segment of the target object in the avatar display box.

In an optional implementation, the method further includes:
in a case that the target object is in a non-livestreaming state, displaying a preset avatar corresponding to the target object in the avatar display box; or
in a case that an image of a target part is not displayed on a current livestreaming image in the live video stream of the target object, displaying a preset avatar corresponding to the target object in the avatar display box.

In an optional implementation, the displaying a live video stream or target video segment of the target object in the avatar display box includes:
if an image of a target part is displayed on a current livestreaming image in the live video stream of the target object, displaying the live video stream or target video segment of the target object in the avatar display box.

In an optional implementation, the trigger operation is an operation triggered by a current object, and the target page is a personal homepage of the target object;
or, the target page is a follow page of a current object; an avatar display box of a following object of the current object is displayed on the follow page; and the target object belongs to the following object of the current object.

In an optional implementation, the displaying a live video stream or target video segment of the target object in the avatar display box includes:
zooming in and displaying the avatar display box on the target page; and
displaying the live video stream or target video segment of the target object in the zoomed-in avatar display box.

In an optional implementation, the zooming in and displaying the avatar display box on the target page includes:
in a case that the target object is in a livestreaming state, zooming in and displaying the avatar display box in a second display size on the target page, wherein the second display size is less than a first display size, and the first display size is a display size of the avatar display box in a case that the target object is in a non-livestreaming state.

Correspondingly, the displaying the live video stream or target video segment of the target object in the zoomed-in avatar display box includes:
displaying the live video stream or target video segment of the target object in the avatar display box with the second display size.

In an optional implementation, after the receiving a trigger operation for requesting to display a target page, the method further includes:
sending a page display request for the target page to a target service end, wherein the target service end is used for returning the live video stream or target video segment of the target object when it is determined that the target object is in a livestreaming state; and
receiving the live video stream or target video segment of the target object.

In an optional implementation, after the sending the page display request that carries an identification of the target object to the target service end, the method further includes:
receiving clipping region position information corresponding to the target object, wherein the clipping region position information is determined based on a display position of an image of a target part in a video image in the live video stream of the target object; and
determining a clipping region based on the clipping region position information.

Correspondingly, the displaying a live video stream or target video segment of the target object in the avatar display box includes:
displaying the live video stream or target video segment of the target object in the avatar display box based on the clipping region, wherein the clipping region is used for controlling an image display region of the live video stream or target video segment of the target object in the avatar display box.

In a second aspect, the present disclosure further provides a page display method, including:
receiving, from a target client, a page display request for a target page, wherein an avatar display box of a target object is set on the target page; and
returning a live video stream or target video segment of the target object to the target client, to display the live video stream or target video segment of the target object in the avatar display box, wherein the target video segment is obtained from the live video stream of the target object.

In an optional implementation, before the returning a live video stream or target video segment of the target object to the target client, the method further includes:
determining whether the target object is in a livestreaming state.

Correspondingly, the returning a live video stream or target video segment of the target object to the target client, to display the live video stream or target video segment of the target object in the avatar display box on the target page of the target client includes:
if it is determined that the target object is in a livestreaming state, returning the live video stream or target video segment of the target object to the target client, to display the live video stream or target video segment of the target object in the avatar display box on the target page of the target client.

In an optional implementation, the method further includes:
returning clipping region position information of the target object to the target client, wherein the clipping region position information is determined based on a display position of an image of a target part on a video image in the live video stream of the target object, and the clipping region position information is used for controlling an image display region of the live video stream or target video segment of the target object in the avatar display box.

In an optional implementation, the method further includes:
taking a screenshot on a livestreaming image in the live video stream of the target object according to a preset screenshot-taking cycle, to obtain a screenshot corresponding to the live video stream;
determining, if it is determined that an image of a target part is displayed in the screenshot, the clipping region position information of the target object based on a display position of the image of the target part in the screenshot; and
storing the clipping region position information of the target object into a preset cache region.

Correspondingly, the returning clipping region position information of the target object to the target client includes:
obtaining the clipping region position information of the target object from the preset cache region, and returning the clipping region position information of the target object to the target client.

In an optional implementation, after the taking a screenshot on a livestreaming image in the live video stream of the target object according to a preset screenshot-taking cycle, to obtain a screenshot corresponding to the live video stream, the method further includes:
storing the screenshot corresponding to the live video stream into a preset message queue.

Correspondingly, before the determining, if it is determined that an image of a target part is displayed in the screenshot, the clipping region position information of the target object based on a display position of the image of the target part in the screenshot, the method further includes:
reading the screenshot corresponding to the live video stream from the preset message queue, and determining whether an image of a target part is displayed in the screenshot.

In a third aspect, the present disclosure provides a page display apparatus, including:
a first receiving module, configured to receive a trigger operation for requesting to display a target page, wherein an avatar display box of a target object is set on the target page; and
a first display module, configured to: in response to the trigger operation, display the target page, and display a live video stream or target video segment of the target object in the avatar display box, wherein the target video segment is obtained from the live video stream of the target object.

In a fourth aspect, the present disclosure further provides a page display apparatus, including:
a second receiving module, configured to receive, from a target client, a page display request for a target page, wherein an avatar display box of a target object is set on the target page; and
a first returning module, configured to: return a live video stream or target video segment of the target object to the target client, to display the live video stream or target video segment of the target object in the avatar display box on the target page of the target client, wherein the target video segment is obtained from the live video stream of the target object.

In a fifth aspect, the present disclosure provides a computer-readable storage medium, having an instruction stored therein. The instruction, when executed on a terminal device, causes the terminal device to implement the above method.

In a sixth aspect, the present disclosure provides a page display device, including a memory, a processor, and a computer program stored on the memory and executable on the processor. The processor, when executing the computer program, implements the above method.

In a seventh aspect, the present disclosure provides a computer program product, including a computer program/instruction. The computer program/instruction, when executed by a processor, implements the above method.

### BRIEF DESCRIPTION OF THE DRAWINGS

The drawings here are incorporated into and form part of the specification, showing the embodiments that comply with the present disclosure, and are used together with the specification to explain the principles of the present disclosure.

In order to describe the technical solutions in the embodiments of the present disclosure or in the related art more clearly, the following briefly introduces the accompanying drawings for describing the embodiments or the related art. Apparently, a person of ordinary skill in the art may still derive other drawings from the accompanying drawings without creative effort.
FIG. 1 is a flowchart of a page display method according to an embodiment of the present disclosure;
FIG. 2 is a schematic diagram of a personal homepage according to an embodiment of the present disclosure;
FIG. 3 is a flowchart of another page display method according to an embodiment of the present disclosure;
FIG. 4 is a flowchart of still another page display method according to an embodiment of the present disclosure;
FIG. 5 is a diagram of data interaction of a page display method according to an embodiment of the present disclosure;
FIG. 6 is a schematic structural diagram of a page display apparatus according to an embodiment of the present disclosure;
FIG. 7 is a schematic structural diagram of another page display apparatus according to an embodiment of the present disclosure; and
FIG. 8 is a schematic structural diagram of a page display device according to an embodiment of the present disclosure.

### DETAILED DESCRIPTION OF EMBODIMENTS

In order to better understand the above objectives, features, and advantages of the present disclosure, the following will further describe the solutions of the present disclosure. It should be noted that the embodiments of the present disclosure and features in the embodiments may be mutually combined without conflicts.

Many specific details have been elaborated in the following description to facilitate a full understanding of the present disclosure, but the present disclosure can also be implemented in other ways different from those described here. Obviously, the embodiments in the specification are only part of the embodiments of the present disclosure, rather than all the embodiments.

At present, a static image and a livestreaming identification are displayed in an avatar display box on a personal homepage to prompt that a live streamer is in a livestreaming state. However, the avatar display box displays single content, which has a poor prompt effect on a user. Thus, an experience of a viewer intending to enter a livestreaming room based on an avatar box of a live streamer is affected.

To this end, an embodiment of the present disclosure provides a page display method. Specifically, a target page is displayed in response to a display trigger operation for the target page. An avatar display box of a target object is set on the target page. In a case that the target object is in a livestreaming state, a live video stream or target video segment of the target object are displayed in the avatar display box on the target page. The target video segment is obtained from the live video stream of the target object. As can be seen, according to the embodiments of the present disclosure, by displaying the live video stream or the target video segment obtained from the live video stream in the avatar display box on the target page, a viewer can preview livestreaming content based on displayed content in the avatar display box, which enriches the displayed content in the avatar display box, facilitates a user to learn about a livestreaming situation, meets needs of the user, and enhances a user experience.

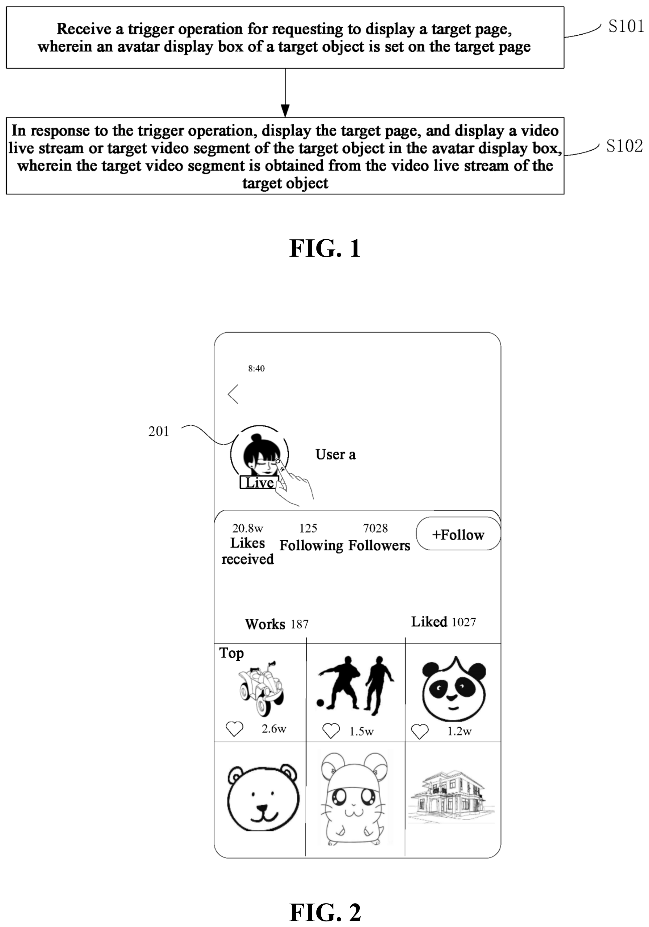

Based on this, an embodiment of the present disclosure provides a page display method. FIG. 1 shows a flowchart of a page display method according to an embodiment of the present disclosure. The method includes:
S101: A trigger operation for requesting to display a target page is received.

An avatar display box of a target object is set on the target page.

The page display method provided in this embodiment of the present disclosure can be applied to a client. For example, the client may include a client deployed on a smart phone, a client deployed on a tablet computer, or the like.

In this embodiment of the present disclosure, the target page may be any page. The avatar display box of the target object is configured on the target page. When a trigger operation for the avatar display box is received, the target page may be redirected to a livestreaming room page of the target object.

The target page may be, for example, a personal homepage of the target object, and the target object may be a user to which the personal homepage belongs. In an embodiment, receiving the trigger operation for requesting to display the target page may be receiving a trigger operation performed by a current object to request to display the target page. The current object may be an object that performs the trigger operation, such as a user currently performing the trigger operation. In some embodiments, the target page may be a personal homepage of a current object. In this case, the target object and the current object are the same. That is, the current object requests to display its own homepage. In some embodiments, the target page may be a personal homepage of another object different from the current object. That is, the current object requests to view the homepage of another user.

In addition, the target page may be, for example, a follow page of the current object. The current object may be a user to which the follow page belongs. The trigger operation for requesting to display the target page is an operation triggered by the current object, and an avatar display box of a following object of the current object is displayed on the follow page. For example, the follow page displays a following list of the current object. Avatar display boxes of objects followed by the current object are displayed in the following list. That is, there is a correspondence relationship between a following object and an avatar display box. In this embodiment of the present disclosure, the target object belongs to the following object of the current object. That is, the target object belongs to a following of the user to which the follow page belongs.

In addition, the target page may be, for example, a video playback page. An avatar display box of a posting user of a currently played video is displayed on the video playback page. That is, the target object is the posting user. Tapping the avatar display box can enter a livestreaming page of the posting user. It is worth noting that in this embodiment of the present disclosure, the avatar display box of the target object is configured on the target page. There are no specific limitations on other features of the target page.

In an optional implementation, the trigger operation for requesting to display the target page may include any operation for triggering displaying of the target page, without limitation. For example, assuming that the target page is the personal homepage of the target object, the display trigger operation for the personal homepage may include a trigger operation for any access of the personal homepage.

S102: In response to the trigger operation, the target page is displayed, and a live video stream or target video segment of the target object is displayed in the avatar display box.

In some embodiments, in response to the trigger operation for the avatar display box, a user enters a livestreaming room of the target object. Thus, tapping the avatar display box can enter the livestreaming room of the target object, watch the livestreaming, and participate in interactions.

The target video segment is obtained from the live video stream of the target object.

In this embodiment of the present disclosure, after the trigger operation for requesting to display the target page is received, the target page is displayed. In a case that it is determined that the target object is in a livestreaming state, the live video stream or target video segment of the target object is displayed in the avatar display box of the target object on the target page. In some embodiments, the target video segment is a highlight segment. The highlight segment may be a highlight segment determined from livestreaming content before current time. When the highlight segment is displayed in the avatar display box on the target page, if the trigger operation for the avatar display box is received, a user enters a livestreaming room of the target object, and the highlight segment is played first. If the user triggers Play of the live video stream in the livestreaming room, the highlight segment is switched to the live video stream for playing.

FIG. 2 is a schematic diagram of a personal homepage according to an embodiment of the present disclosure. A live video stream of a user to which the personal homepage belongs or a target video segment is displayed in an avatar display box 201 on the personal homepage, prompting that the user is currently in a livestreaming state and supporting a current user to preview livestreaming content of the user. The avatar display box shows video livestreaming content of the target object, making it easier for the current user to learn about the video livestreaming content without entering the livestreaming room. In addition, when the target object is in a livestreaming state, the live video stream or target video segment of the target object is displayed in the avatar display box 201, a "Live" tag may be displayed in the avatar display box 201, to more intuitively prompt that the target object is in the livestreaming state.

In addition, the live video stream or target video segment of the target object is displayed in the avatar display box 201, which can allow a user to learn about livestreaming content more intuitively, conveniently, and efficiently. Compared with an existing solution of only learning about the livestreaming content by tapping the avatar display box, this embodiment of the present disclosure has a shorter path and higher efficiency, and enhances the user experience.

In addition, if the target object is not in a video livestreaming state, an image, such as a user avatar of the target object, may be displayed in the avatar display box 201 on the target page.

In an optional implementation, in a case that it is determined that the target object is in a livestreaming state, the live video stream of the target object is pulled from a livestreaming service end, and the pulled live video stream is displayed in the avatar display box of the target object on the target page. Through the live video stream displayed in the avatar display box, the current user may preview the livestreaming content of the target object. By tapping the avatar display box, the current user may enter the livestreaming room of the target object to watch livestreaming.

In another optional implementation, in a case that it is determined that the target object is in a livestreaming state, the target video segment of the target object is obtained from a service end. The target video segment is obtained from the live video stream of the target object, and includes a plurality of consecutive frames of livestreaming images in the live video stream of the target object. For example, the target video segment may be a video segment of a period of time in content that has been livestreamed in the live video stream of the target object, such as a video segment, having livestreaming interaction information that satisfying a preset condition, in the live video stream of the target object, such as a video segment with a large interaction quantity.

In this embodiment of the present disclosure, in a case that it is determined that the target object is in a non-livestreaming state (in the process of displaying the target page, if it is determined that the target object is in the non-livestreaming state, namely, in a non-live state), a preset avatar corresponding to the target object may be displayed in the avatar display box of the target object on the target page. Alternatively, in a case that an image of a target part is not displayed on a current livestreaming image in the live video stream of the target object, a preset avatar corresponding to the target object is displayed in the avatar display box.

In an optional implementation, since the avatar display box has an attribute of displaying an avatar, in a case that the target object is in a livestreaming state (in the process of displaying the target page, if it is determined that the target object is in a livestreaming state, that is, in a live state), when the trigger operation for requesting to display the target page, it can be determined whether an image of a target part is displayed on a current livestreaming image (for example, a livestreaming image of a time point corresponding to the trigger operation for requesting to display the target page) in the live video stream of the target object. The image of the target part may include a head image or the like. The image of the target part may also be an image of a target part of the target object. If it is determined that an image of a target part is displayed on a video image, the live video stream or target video segment of the target object is displayed in the avatar display box on the target page. As a result, user needs are met, and the user experience is enhanced.

In addition, in order to enhance a display effect on displayed content in the avatar display box on the target page, this embodiment of the present disclosure may zoom in and display the avatar display box on the target page when it is determined that the target object is in the livestreaming state, and display the live video stream or target video segment of the target object in the zoomed-in avatar display box, thereby more effectively prompting that a live streamer that it is in a livestreaming state.

In an optional implementation, in a case that the target object is in a livestreaming state, the avatar display box is zoomed in and displayed on the target page in a second display size, and then the live video stream or target video segment of the target object is displayed in the avatar display box with the second display size. The second display size is less than a first display size, and the first display size is a display size of the avatar display box in a case that the target object is in a non-livestreaming state. As can be seen, compared with the target object being in the non-livestreaming state, in the livestreaming state, the display size of the avatar display box on the target page is larger, to highlight the live video stream or target video segment of the target object, which further enhances the effect of prompting that the target object is in the livestreaming state.

In the page display method in this embodiment of the present disclosure, a trigger operation for requesting to display a target page is received. In response to the trigger operation, the target page is displayed, and a live video stream or target video segment of a target object is displayed in an avatar display box on the target page. The target video segment is obtained from the live video stream of the target object. As can be seen, according to this embodiment of the present disclosure, by displaying the live video stream or the target video segment obtained from the live video stream in the avatar display box on the target page, a viewer can preview livestreaming content based on displayed content in the avatar display box, which enriches the displayed content in the avatar display box, enhances the effect of prompting livestreaming of a user through the avatar display box, and enhances the experience of a viewer intending to enter a livestreaming room based on an avatar box of a live streamer.

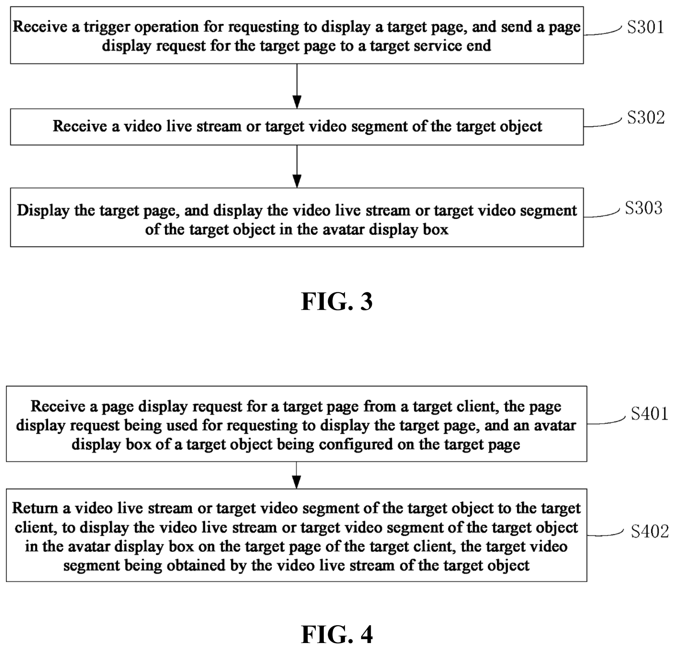

Based on the above embodiment, an embodiment of the present disclosure further provides a page display method. The page display method is implemented through data interaction between a client and a target service end. FIG. 3 is a flowchart of another page display method according to an embodiment of the present disclosure, specifically including:
S301: A trigger operation for requesting to display a target page is received, and a page display request for the target page is sent to a target service end.

The target service end is configured to return a live video stream or target video segment of a target object when it is determined that the target object is in a livestreaming state.

In practical applications, when a client receives the trigger operation for requesting to display the target page, the client sends the page display request for the target page to the target service end, to request to display the target page on the client. An avatar display box of the target object is displayed on the target page. The page display request carries an identification of the target object. The identification of the target object is used for uniquely identifying the target object.

In this embodiment of the present disclosure, the target service end may be a server or a server cluster composed of a plurality of servers.

In this embodiment of the present disclosure, the live video stream is a continuous video stream formed from the beginning to the end of a livestreaming.

After receiving the page display request carrying the identification of the target object, the target service end first determines whether the target object is in a livestreaming state. If it is determined that the target object is in a livestreaming state, the target service end pulls the live video stream or target video segment of the target object, and returns the live video stream or target video segment of the target object to the client. The target video segment includes a plurality of consecutive frames of livestreaming images in the live video stream of the target object.

In an optional implementation, when the target service end receives the page display request carrying the identification of the target object and determines that the target object is in a livestreaming state, the target service end may push the live video stream of the target object to the client, so that the client may display the live video stream in the avatar display box on the target page.

In another optional implementation, when the target service end receives the page display request carrying the identification of the target object and determines that the target object is in a livestreaming state, the target service end may return a predetermined target video segment to the client, so that the client may display the target video segment in the avatar display box on the target page. The target video segment may be a video segment determined in advance by the target object from the live video stream, or may be a video segment determined by the target service end from the live video stream based on livestreaming data of a livestreaming room of the target object. For example, the target video segment may be a video segment of a period of time in the live video stream of the target object, such as a segment having a high livestreaming click-through rate, a large popularity value, and the like in the live video stream of the target object.

If it is determined that the target object is not in a livestreaming state, the target service end may return a user avatar of the target object to the client for being displayed in a user avatar box on the target page.

S302: A live video stream or target video segment of the target object is received.

In this embodiment of the present disclosure, the client receives the live video stream or the target video segment from the target service end, and displays the target page.

S303: the target page is displayed, and the live video stream or target video segment of the target object is displayed in the avatar display box.

The target video segment is obtained from the live video stream of the target object.

The avatar display box is used for being triggered to display a livestreaming room page of the live video stream of the target object.

In this embodiment of the present disclosure, if the live video stream or target video segment of the target object that is returned by the target service end, it indicates that the target object is in a livestreaming state. The client may display the target page and display the live video stream or target video segment of the target object in the avatar display box on the target page.

In an optional implementation, the target service end returns the live video stream of the target object to the client. Specifically, the target service end pulls the live video stream of the target object in real time from a livestreaming server, so that the live video stream can be played in real time in the avatar display box on the target page. Through the live video stream played in the avatar display box, video livestreaming content of the target object can be previewed. By previewing the live video stream played in the avatar display box, it is possible to determine whether a user is interested in the video livestreaming content of the target object. In addition, tapping the avatar display box may enter the livestreaming room of the target object and watch a video livestreaming of the target object.

In another optional implementation, if the target service end returns the target video segment of the target object to the client, the target video segment may be played in a loop in the avatar display box on the target page. Through the target video segment played in a loop in the avatar display box, the video livestreaming content of the target object can be learned, thereby determining whether to tap the avatar display box to enter the livestreaming room of the target object and watch the video livestreaming of the target object.

In practical applications, since the avatar display box only has a display function, the live video stream or target video segment of the target object that is played in the avatar display box on the target page in this embodiment of the present disclosure may not support audio outputting.

In addition, at the end of the livestreaming of the target object, the avatar display box on the target page can be updated to display a static avatar of the target object.

In an optional implementation, since the avatar display box has an attribute of displaying an avatar, when the target service end determines that the target object is in a video livestreaming state, but there is no target part image displayed in a video livestreaming image, such as a portrait, the target service end may not return the live video stream or target video segment of the target object, but return a user avatar of the target object. In this case, a static avatar of the target object and a "Live" tag may be displayed in the avatar display box 201 in FIG. 2.

In practical applications, due to a limited display region of the avatar display box on the target page, how to match the avatar display box with the live video stream or target video segment of the target object is a key issue. In order to improve a display effect of the avatar display box on the live video stream or target video segment of the target object, this embodiment of the present disclosure can control an image display region of the avatar display box for the live video stream or target video segment of the target object based on a clipping region determined from clipping region position information of the target object.

In an optional implementation, clipping region position information corresponding to the avatar display box may be set in advance to control an image display region of the avatar display box for the live video stream or target video segment of the target object. For example, the preset clipping region position information may be position information of a rectangular or circular region determined by using a center point of a video image in the live video stream as a center position. After receiving the live video stream or target video segment of the target object, the client displays the live video stream or target video segment of the target object in the avatar display box on the target page based on the clipping region position information. Specifically, the clipping region determined based on the clipping region position information is applied to a player corresponding to the avatar display box, to control the image display region of the live video stream or the target video segment played in the avatar display box, for example, to control an avatar region in the video image of the live video stream or the target video segment displayed in the avatar display box, that is, a partial region using an avatar as a center.

In another optional implementation, based on the above embodiment, the live video stream or target video segment of the target object may also be controlled to be displayed in the avatar display box on the target page in a proportional zoom-in or zoom-out manner. For example, in a case that a display screen of the client is large, such as a projection screen, giant screen, and another large screen, a region of the avatar display box on the target page for displaying the live video stream or target video segment of the target object is also large. Therefore, the image display region of the live video stream or target video segment of the target object may be displayed in the avatar display box after being zoomed in. Similarly, when the display screen of the client is small, such as a mobile phone screen, the image display region of the live video stream or target video segment of the target object may be displayed in the avatar display box after being zoomed out.

In order to display the image of the target part in the video livestreaming image more accurately in the avatar display box on the target page, this embodiment of the present disclosure can determine the clipping region position information based on a display position of the image of the target part in the video livestreaming image. The image of the target part may be a specific object such as a portrait or an avatar in the livestreaming image.

Therefore, in this embodiment of the present disclosure, after the page display request carrying the identification of the target object is sent to the target service end, if the target service end determines that the target object is in a livestreaming state, the target service end returns the clipping region position information of the target object, to control the image display region of the live video stream or target video segment of the target object in the avatar display box on the target page.

Specifically, the target service end determines the clipping region position information of the target object based on the display position of the image of the target part on the video image of live video stream of the target object, so as to display the image of the target part in the avatar display box.

This embodiment of the present disclosure provides a page display method. Through data interaction between the client and the target service end, the live video stream or the target video segment obtained from the live video stream can be displayed in the avatar display box on the target page, so that a viewer can preview livestreaming content based on displayed content in the avatar display box, which enriches the displayed content in the avatar display box, enhances the effect of prompting livestreaming of a user through the avatar display box, and enhances the experience of a viewer intending to enter a livestreaming room based on an avatar box of a live streamer.

Based on the above embodiment, an embodiment of the present disclosure further provides a page display method. FIG. 4 shows a flowchart of another page display method according to an embodiment of the present disclosure. The method includes:
S401: A page display request for a target page is received from a target client.

The page display request is used for requesting to display the target page, and an avatar display box of a target object is set on the target page.

The page display method provided in this embodiment of the present disclosure is applied to a target service end. The target service end may be a single server or a server cluster composed of a plurality of servers.

In this embodiment of the present disclosure, when receiving the page display request carrying an identification of the target object, the target service end first determines whether the target object is in a livestreaming state, so as to determine whether to return a live video stream or target video segment of the target object to the target client.

The method for determining whether the target object is in a livestreaming state is not limited in this embodiment of the present disclosure.

S402: A live video stream or target video segment of the target object is returned to the target client, to display the live video stream or target video segment of the target object in the avatar display box on the target page of the target client.

The target video segment is obtained from the live video stream of the target object.

In this embodiment of the present disclosure, when determining that the target object is in a livestreaming state, the target service end returns the live video stream or target video segment of the target object to the target client. When determining that the target object is in a non-livestreaming state, the target service end returns a user avatar of the target object to the target client.

In an optional implementation, if it is determined that the target object is in a livestreaming state, clipping region position information of the target object is returned to the target client, wherein the clipping region position information is determined based on a display position of an image of a target part on a video image in the live video stream of the target object, and the clipping region position information is used for controlling an image display region of the live video stream or target video segment of the target object in the avatar display box.

In another optional implementation, in a livestreaming process of the target object, the target service end takes a screenshot on a livestreaming image in the live video stream of the target object according to a preset screenshot-taking cycle, to obtain a screenshot corresponding to the live video stream. If it is determined that an image of a target part exists in the screenshot, clipping region position information of the target object is determined based on a display position of the image of the target part in the screenshot; and the clipping region position information of the target object is stored into a preset cache region. Specifically, when determining that the target object is in a livestreaming state, the target service end may obtain the clipping region position information of the target object from the preset cache region, and return the clipping region position information to the target client.

In an optional implementation, after taking a screenshot on the livestreaming image in the live video stream of the target object to obtain the screenshot corresponding to the live video stream, the target service end may store the screenshot corresponding to the live video stream into a preset message queue. When a condition for analyzing the screenshot is satisfied, the screenshot corresponding to the live video stream may be read from the preset message queue, and whether an image of a target part is displayed on the screenshot is determined, for example, whether an image of a target part is displayed on the screenshot is determined. If it is determined that the image of the target part is displayed on the screenshot, the clipping region position information of the target object is determined based on a display position of the image of the target part on the screenshot. For example, a rectangular or circular region is determined as a clipping region by using the display position of the image of the target part on the screenshot as a center point, and position information (such as coordinates of an upper left corner and a lower right corner) of the clipping region is used as the clipping region position information of the target object. The clipping region position information of the target object is stored into a preset cache region.

In this embodiment of the present disclosure, when receiving the page display request carrying the identification of the target object, the target service end may directly obtain the clipping region position information of the target object from the preset cache region, thereby implementing asynchronous processing with the page display request and reducing occurrence of an abnormal situation in the target service end caused by a large number of page display requests.

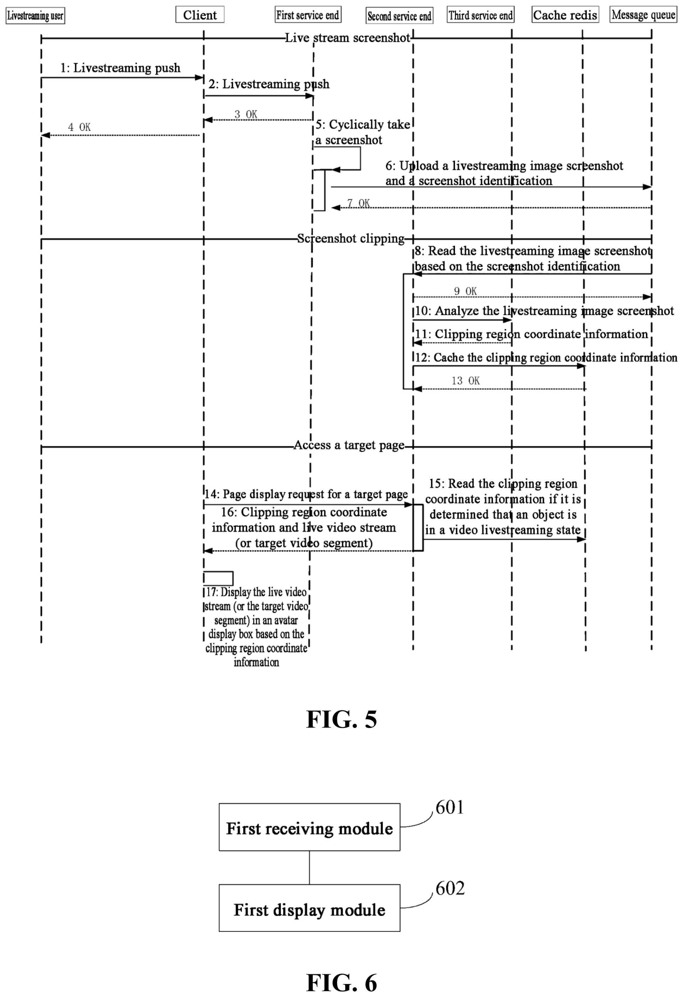

Based on the above embodiment, FIG. 5 is a diagram of data interactions of a page display method according to an embodiment of the present disclosure. Regarding the section "Access a target page", a client receives a trigger operation for requesting to display a target page and sends a page display request to a second server end. After receiving the page display request, the second service end first determines whether a target object is in a video livestreaming state. If yes, the second service end pulls a live video stream of the target object from a livestreaming service end and returns the live video stream to the client. In order to enhance a display effect on a user avatar box, the second service end may further obtain clipping region coordinate information of the target object from a preset cache region redis and return the clipping region coordinate information to the client. After receiving the live video stream and the clipping region coordinate information, the client applies the clipping region coordinate information to a player, and uses the player to play the live video stream in an avatar display box on the target page. A clipping region determined based on the clipping region coordinate information is used for controlling an image display region of the live video stream in the avatar display box.

For the section "Live stream screenshot", a live streamer pushes a live stream to a first service end in a livestreaming process. The first service end takes a screenshot on a livestreaming image once according to a preset screenshot-taking cycle (such as 10s), and then saves a livestreaming image screenshot into a preset message queue. Livestreaming image screenshots stored in the preset message queue have their own screenshot identifications, and the corresponding livestreaming image screenshots may be obtained from the screenshot identifications.

For the section "Screenshot clipping", the second service end reads the livestreaming image screenshot from the preset message queue based on the screenshot identification and sends the livestreaming image screenshot to a third service end. The third service end analyzes the livestreaming image screenshot to determine whether there is an image of a target part (such as a portrait or another specific part object) on the livestreaming image screenshot. If yes, the third service end determines clipping region coordinate information based on a display position of the image of the target part in the livestreaming image screenshot and returns the clipping region coordinate information to the second service end. The second service end sends the clipping region coordinate information to the preset cache region redis. In an optional implementation, the display position of the image of the target part in the livestreaming image screenshot may be used as a center point, and a short edge in the livestreaming image screenshot may be used as an edge of a clipping region, so that the clipping region is determined. Coordinates of an upper left corner and a lower right corner of the clipping region are used as clipping region coordinate information which is stored in redis.

In an optional implementation, after determining the clipping region coordinate information, the second service end stores the clipping region coordinate information in redis and overrides historical clipping region coordinate information. That is, redis stores latest clipping region position information, and the latest clipping region position information may reflect a display position of a portrait in the live video stream. Therefore, based on the latest clipping region position information, displaying of the live video stream in the avatar display box on the target page is controlled more accurately.

In addition, the second service end can further delete the clipping region coordinate information stored in redis in a case that it is detected that no new clipping region coordinate information is determined within a preset duration, it indicates that there is no target image on a livestreaming image in the live video stream.

In the page display method according to this embodiment of the present disclosure, the three processing flows of the section "Access a target page", the section "Live stream screenshot", and the section "Screenshot clipping" are set to be asynchronously implemented, especially, the section "Access a target page" and the other two sections are asynchronously implemented, which may avoid occurrence of problems such as service end lagging and slow loading that are caused by a large number of page display requests from the client.

Based on the above method embodiment, the present disclosure further provides a page display apparatus. FIG. 6 is a schematic structural diagram of a page display apparatus according to an embodiment of the present disclosure. The apparatus includes:
a first receiving module 601, configured to receive a trigger operation for requesting to display a target page, wherein an avatar display box of a target object is set on the target page; and
a first display module 602, configured to: in response to the trigger operation, display the target page, and display a live video stream or target video segment of the target object in the avatar display box, wherein the target video segment is obtained from the live video stream of the target object.

In an optional implementation, the first display module is specifically configured to:
in a case that the target object is in a livestreaming state, display the live video stream or target video segment of the target object in the avatar display box.

In an optional implementation, the apparatus further includes:
a second display module, configured to: in a case that the target object is in a non-livestreaming state, display, in the avatar display box, a preset avatar corresponding to the target object; or
in a case that an image of a target part is not displayed on a current livestreaming image in the live video stream of the target object, display, in the avatar display box, a preset avatar corresponding to the target object.

In an optional implementation, the first display module is specifically configured to:
if an image of a target part is displayed on a current livestreaming image in the live video stream of the target object, display the live video stream or target video segment of the target object in the avatar display box.

In an optional implementation, the trigger operation is an operation triggered by a current object, and the target page is a personal homepage of the target object;
or, the target page is a follow page of a current object; an avatar display box of a following object of the current object is displayed on the follow page; and the target object belongs to the following object of the current object.

In an optional implementation, the first display module includes:
a zoom-in submodule, configured to zoom in and display the avatar display box on the target page; and
a display submodule, configured to display the live video stream or target video segment of the target object in the zoomed-in avatar display box.

In an optional implementation, the zoom-in submodule is specifically configured to:
in a case that the target object is in a livestreaming state, zoom in and display the avatar display box in a second display size on the target page, wherein the second display size is less than a first display size, and the first display size is a display size of the avatar display box in a case that the target object is in a non-livestreaming state.

Correspondingly, the display submodule is specifically configured to:
display the live video stream or target video segment of the target object in the avatar display box with the second display size.

In an optional implementation, the apparatus further includes:
a first sending module, configured to send a page display request for the target page to a target service end, wherein the target service end is configured to return the live video stream or target video segment of the target object when it is determined that the target object is in a livestreaming state; and
a third receiving module, configured to receive the live video stream or target video segment of the target object.

In an optional implementation, the apparatus further includes:
a fourth receiving module, configured to receive clipping region position information corresponding to the target object, wherein the clipping region position information is determined based on a display position of an image of a target part in a video image in the live video stream of the target object; and
a first determining module, configured to determine a clipping region based on the clipping region position information.

Correspondingly, the first display module is specifically configured to:
display the live video stream or target video segment of the target object in the avatar display box based on the clipping region, wherein the clipping region is used for controlling an image display region of the live video stream or target video segment of the target object in the avatar display box.

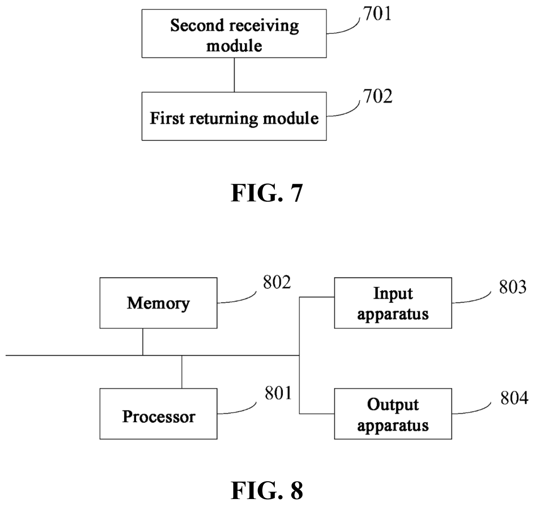

Based on the above method embodiment, the present disclosure further provides a page display apparatus. FIG. 7 is a schematic structural diagram of another page display apparatus according to an embodiment of the present disclosure. The apparatus includes:
a second receiving module 701, configured to receive, from a target client, a page display request for a target page, wherein an avatar display box of a target object is set on the target page; and
a first returning module 702, configured to: return a live video stream or target video segment of the target object to the target client, to display the live video stream or target video segment of the target object in the avatar display box on the target page of the target client, wherein the target video segment is obtained from the live video stream of the target object.

In an optional implementation, the apparatus further includes:
a second determining module, configured to determine whether the target object is in a livestreaming state.

Correspondingly, the first returning module is specifically configured to:
if it is determined that the target object is in a livestreaming state, return the live video stream or target video segment of the target object to the target client, to display the live video stream or target video segment of the target object in the avatar display box on the target page of the target client.

In an optional implementation, the apparatus further includes:
a second returning module, configured to return clipping region position information of the target object to the target client, wherein the clipping region position information is determined based on a display position of an image of a target part on a video image in the live video stream of the target object, and the clipping region position information is used for controlling an image display region of the live video stream or target video segment of the target object in the avatar display box.

In an optional implementation, the apparatus further includes:
a screenshot-taking module, configured to take a screenshot on a livestreaming image in the live video stream of the target object according to a preset screenshot-taking cycle, to obtain a screenshot corresponding to the live video stream;
a third determining module, configured to: determine, when it is determined that an image of a target part is displayed in the screenshot, the clipping region position information of the target object based on a display position of the image of the target part in the screenshot; and
a first storage module, configured to store the clipping region position information of the target object into a preset cache region.

Correspondingly, the second returning module is specifically configured to:
obtain the clipping region position information of the target object from the preset cache region, and return the clipping region position information of the target object to the target client.

In an optional implementation, the apparatus further includes:
a second storage module, configured to store the screenshot corresponding to the live video stream into a preset message queue.

Correspondingly, the apparatus further includes:
a reading module, configured to: read the screenshot corresponding to the live video stream from the preset message queue, and determine whether an image of a target part is displayed in the screenshot.

According to this embodiment of the present disclosure, by displaying the live video stream or the target video segment obtained from the live video stream in the avatar display box on the target page, a viewer can preview livestreaming content based on displayed content in the avatar display box, which enriches the displayed content in the avatar display box, facilitates a user to learn about a livestreaming situation, meets needs of the user, and enhances a user experience.

In addition to the above methods and apparatuses, an embodiment of the present disclosure further provides a computer-readable storage medium. The computer-readable storage medium stores an instruction. The instruction, when executed on a terminal device, causes the terminal device to implement the page display method according to the embodiments of the present disclosure.

An embodiment of the present disclosure further provides a computer program product. The computer program product includes a computer program/instruction, and the computer program/instruction, when executed by a processor, implements the page display method according to the embodiments of the present disclosure.

In addition, an embodiment of the present disclosure further provides a page display device. Referring to FIG. 8, the page display device may include:
a processor 801, a memory 802, an input apparatus 803, and an output apparatus 804. A quantity of the processor 801 in the page display device may be one or more. By way of example, FIG. 8 shows one processor. In some embodiments of the present disclosure, the processor 801, the memory 802, the input apparatus 803, and the output apparatus 804 can be connected through a bus or in another way. By way of example, FIG. 8 shows bus connection.

The memory 802 may be configured to store software programs and modules. The processor 801 runs the software programs and modules stored in the memory 802, so as to implement various functional applications and data processing of the page display device. The memory 802 may mainly include a program storage region and a data storage region. The program storage region may store an operating system, an application program required by at least one function, and the like. In addition, the memory 802 may include a high speed random access memory, and may further include a non-volatile memory, such as at least one magnetic disk storage device, a flash memory, or another volatile solid storage device. The input apparatus 803 may be configured to receive input numeric or character information and generate signal inputs related to user settings and function control of the page display device.

Specifically, in this embodiment, the processor 801 may load, according to the following instructions, executable files corresponding to processes of one or more application programs into the memory 802. The processor 801 runs the application programs stored in the memory 802, to implement the various functions of the above page display device.

It should be noted that in this document, relationship terms such as "first" and "second" are used solely to distinguish one entity or operation from another entity or operation without necessarily requiring or implying any actual such relationship or order between such entities or operations. Furthermore, the terms "include", "including", or any other variation thereof, are intended to encompass a non-exclusive inclusion, such that a process, method, article, or device that includes a list of elements does not include only those elements but may include other elements not explicitly listed or inherent to such process, method, article, or device. Without further limitation, an element defined by the phrase "including a/an..." does not exclude the presence of another identical elements in the process, method, article or device that includes the element.

The above only describes the specific implementations of the present disclosure, which enables those skilled in the art to understand or implement the present disclosure. The various modifications to these embodiments will be apparent to those skilled in the art, and the general principles defined herein can be implemented in other embodiments without departing from the spirit or scope of the present disclosure. Thus, the present disclosure is not limited to these embodiments shown herein, but accords with the broadest scope consistent with the principles and novel features disclosed herein.

## Claims

1. A page display method, comprising:
receiving a trigger operation for requesting to display a target page, wherein an avatar display box of a target object is set on the target page; and
in response to the trigger operation, displaying the target page, and displaying a live video stream or a target video segment of the target object in the avatar display box, wherein the target video segment is obtained from the live video stream of the target object.

2. The method according to claim 1, wherein displaying the live video stream or the target video segment of the target object in the avatar display box comprises:
in a case that the target object is in a livestreaming state, displaying the live video stream or the target video segment of the target object in the avatar display box.

3. The method according to claim 1, further comprising:
in a case that the target object is in a non-livestreaming state, displaying a preset avatar corresponding to the target object in the avatar display box; or
in a case that an image of a target part is not displayed on a current livestreaming image in the live video stream of the target object, displaying a preset avatar corresponding to the target object in the avatar display box.

4. The method according to claim 1, wherein displaying the live video stream or the target video segment of the target object in the avatar display box comprises:
in response to an image of a target part being displayed on a current livestreaming image in the live video stream of the target object, displaying the live video stream or the target video segment of the target object in the avatar display box.

5. The method according to claim 1, wherein the trigger operation is an operation triggered by a current object, and the target page is a personal homepage of the target object;
or, the target page is a follow page of the current object, an avatar display box of a following object of the current object is displayed on the follow page, and the target object belongs to the following object of the current object.

6. The method according to claim 1, wherein displaying the live video stream or the target video segment of the target object in the avatar display box comprises:
zooming in and displaying the avatar display box on the target page; and
displaying the live video stream or the target video segment of the target object in the zoomed-in avatar display box.

7. The method according to claim 6, wherein zooming in and displaying the avatar display box on the target page comprises:
in a case that the target object is in a livestreaming state, zooming in and displaying the avatar display box in a second display size on the target page, wherein the second display size is less than a first display size, and the first display size is a display size of the avatar display box in a case that the target object is in a non-livestreaming state; and
correspondingly, displaying the live video stream or the target video segment of the target object in the zoomed-in avatar display box comprises:
displaying the live video stream or the target video segment of the target object in the avatar display box with the second display size.

8. The method according to claim 1, wherein after receiving the trigger operation for requesting to display a target page, the method further comprising:
sending a page display request for the target page to a target service end, wherein the target service end is configured to return the live video stream or the target video segment of the target object in response to determining that the target object is in a livestreaming state; and
receiving the live video stream or the target video segment of the target object.

9. The method according to claim 8, wherein after sending the page display request that carries an identification of the target object to the target service end, the method further comprising:
receiving clipping region position information corresponding to the target object, wherein the clipping region position information is determined based on a display position of an image of a target part in a video image in the live video stream of the target object; and
determining a clipping region based on the clipping region position information,
correspondingly, displaying a live video stream or the target video segment of the target object in the avatar display box comprises:
displaying the live video stream or the target video segment of the target object in the avatar display box based on the clipping region, wherein the clipping region is used for controlling an image display region of the live video stream or the target video segment of the target object in the avatar display box.

10. A page display method, comprising:
receiving, from a target client, a page display request for a target page, wherein an avatar display box of a target object is set on the target page; and
returning a live video stream or a target video segment of the target object to the target client, to display the live video stream or the target video segment of the target object in the avatar display box, wherein the target video segment is obtained from the live video stream of the target object.

11. The method according to claim 10, wherein before returning the live video stream or the target video segment of the target object to the target client, the method further comprising:
determining whether the target object is in a livestreaming state,
correspondingly, returning the live video stream or the target video segment of the target object to the target client, to display the live video stream or the target video segment of the target object in the avatar display box on the target page of the target client comprises:
in response to determining that the target object is in a livestreaming state, returning the live video stream or the target video segment of the target object to the target client, to display the live video stream or target video segment of the target object in the avatar display box on the target page of the target client.

12. The method according to claim 10, further comprising:
returning clipping region position information of the target object to the target client, wherein the clipping region position information is determined based on a display position of an image of a target part on a video image in the live video stream of the target object, and the clipping region position information is used for controlling an image display region of the live video stream or target video segment of the target object in the avatar display box.

13. The method according to claim 12, further comprising:
taking a screenshot on a livestreaming image in the live video stream of the target object according to a preset screenshot-taking cycle, to obtain a screenshot corresponding to the live video stream;
in response to determining that an image of a target part is displayed in the screenshot, determining the clipping region position information of the target object based on a display position of the image of the target part in the screenshot; and
storing the clipping region position information of the target object into a preset cache region,
correspondingly, returning the clipping region position information of the target object to the target client comprises:
obtaining the clipping region position information of the target object from the preset cache region, and returning the clipping region position information of the target object to the target client.

14. The method according to claim 12, wherein after the taking a screenshot on the livestreaming image in the live video stream of the target object according to the preset screenshot-taking cycle, to obtain the screenshot corresponding to the live video stream, the method further comprising:
storing the screenshot corresponding to the live video stream into a preset message queue; and
correspondingly, before determining, in response to determining that the image of the target part is displayed in the screenshot, the clipping region position information of the target object based on the display position of the image of the target part in the screenshot, the method further comprising:
reading the screenshot corresponding to the live video stream from the preset message queue, and determining whether an image of a target part is displayed in the screenshot.

15. A page display apparatus, comprising:
a first receiving module, configured to receive a trigger operation for requesting to display a target page, wherein an avatar display box of a target object is set on the target page; and
a first display module, configured to: in response to the trigger operation, display the target page, and display a live video stream or a target video segment of the target object in the avatar display box, wherein the target video segment is obtained from the live video stream of the target object.

16. A page display apparatus, comprising:
a second receiving module, configured to receive, from a target client, a page display request for a target page, wherein an avatar display box of a target object is set on the target page; and
a first returning module, configured to: return a live video stream or a target video segment of the target object to the target client, to display the live video stream or target video segment of the target object in the avatar display box on the target page of the target client, wherein the target video segment is obtained from the live video stream of the target object.

17. A computer-readable storage medium, having an instruction stored therein, wherein the instruction, when being executed on a terminal device, causes the terminal device to implement the method according to any of claims 1 to 14.

18. A page display device, comprising:
a memory;
a processor; and
a computer program stored on the memory and executable on the processor, wherein the processor, when executing the computer program, implements the method according to any of claims 1 to 14.
